**Europäisches Patentamt**

**European Patent Office**

**Office européen des brevets**

(11) Veröffentlichungsnummer: **0 268 061 B1**

(12) **EUROPÄISCHE PATENTSCHRIFT**

(45) Veröffentlichungstag der Patentschrift: **10.07.91**

(51) Int. Cl.⁵: **B61G 11/12**

(21) Anmeldenummer: **87114708.8**

(22) Anmeldetag: **08.10.87**

(54) **Stossvorrichtung zur federnden und absorbierenden Aufnahme von Stosskräften.**

(30) Priorität: **12.11.86 DE 3638597**

(43) Veröffentlichungstag der Anmeldung:
**25.05.88 Patentblatt 88/21**

(45) Bekanntmachung des Hinweises auf die
Patenterteilung:
**10.07.91 Patentblatt 91/28**

(84) Benannte Vertragsstaaten:
**AT BE CH DE ES FR GB IT LI NL SE**

(56) Entgegenhaltungen:
**DE-A- 1 817 807**
**DE-C- 471 804**
**DE-C- 529 814**
**FR-A- 1 234 184**
**FR-A- 1 234 814**

(73) Patentinhaber: **Waggon Union GmbH**

**W-5900 Siegen(DE)**

(72) Erfinder: **Schneider, Felix**
**In der Hanfwiese 2**
**W-5902 Netphen 2(DE)**
Erfinder: **Hübsch, Henry, Dipl.-Ing.**
**Hans-Sachs-Weg 5**
**W-5900 Siegen 21(DE)**
Erfinder: **Büdenbender, Herbert**
**Feldwasserstrasse 1**
**W-5902 Netphen 2(DE)**

**Beschreibung**

Die Erfindung betrifft eine Stoßvorrichtung zur federnden und absorbierenden Aufnahme von Stoßkräften, insbesondere Hülsenpuffer für Schienenfahrzeuge, bestehend aus
- zwei teleskopartig ineinander geführten, gegen Federkraft zueinander verspannten Gehäuseteilen,
- einem in dem einen Gehäuseteil angeordneten Druckzylinder,
- einem aus dem Druckzylinder ragenden, gegen das andere Gehäuseteil abgestützten Plunger, der an seinem in den Druckzylinder ragenden Ende einen Plungerkopf trägt, wobei
- der Druckzylinder mit einem kompressiblen Medium gefüllt ist und
- zwei durch einen Führungsring für den Plungerschaft getrennte Medium-Kammern aufweist.

Hülsenpuffer der obengenannten Art, die aus zwei teleskopartig ineinander geführten, gegen Federkraft zueinander verspannten Gehäuseteilen und einem in dem Hülsenpuffer angeordneten, einendig gegen ein Gehäuseteil abgestützten Druckzylinder mit einem aus dem anderen Ende des Druckzylinders ragenden, gegen das andere Gehäuseteil abgestützten Plunger bestehen, sind aus der Praxis (Bauart Jarret) bekannt. Hierbei ist ein Gehäuseteil des Hülsenpuffers direkt als Druckzylinder ausgebildet und mit einem kompressiblen Elastomer gefüllt. Ein in dem Druckzylinder längsbeweglicher, zentrisch in einer Verschlußmutter geführter Plunger mit einem Plungerkopf im Druckzylinder ist mit dem Plungerschaft über eine Feder gegen das andere Gehäuseteil abgestützt. Der Druckzylinder ist auf seiner Innenseite zylindrisch ausgebildet und vollständig mit Elastomer gefüllt. Der Plungerkopf weist dabei Spiel zu der inneren Zylinderwandung auf. Beim Zusammendrücken des Puffers wird der Plunger mit seinem Plungerkopf in den Druckzylinder getaucht und komprimiert dabei das Elastomer. Nachteilig bei dieser Ausführung ist die Führung des Plungers in lediglich einer Gleitführung in der Verschlußmutter, die bei dem hochbeanspruchten Bauteil zum Verschleiß neigt. Schon geringer Verschleiß in der Plungerführung bewirkt eine Undichtigkeit des Druckraumes in dem Druckzylinder. Diese Undichtigkeit wirkt sich sofort auf die statische Kennlinie des Puffers nachteilig aus. Außerdem tritt bei der vorbekannten Konstruktion aufgrund der zylindrischen Ausbildung des Druckraumes im Druckzylinder ein zu hoher Rückstoß auf, so daß der geforderte Energieverzehr nicht gegeben ist.

Weiter sind aus der DE-A 2 851 041 und aus der DE-A 3 035 922 Stoßvorrichtungen bekannt, die einen Druckzylinder mit Plunger aufweisen, wobei der Druckzylinder mit einem kompressiblen Elastomer gefüllt ist. Die Ausbildung der Druckzylinder entsprechen dabei im wesentlichen der durch die Ausführung Jarret bekannten Art. Sie weisen somit auch die gleichen Nachteile auf.

Durch die FR-A 1 234 184 ist weiter eine Stoßvorrichtung der eingangs genannten Art bekannt, die einen Druckzylinder mit einem aus dem Druckzylinder ragenden, gegen ein Gehäuseteil abgestützten Plunger aufweist, der an seinem in den Zylinder ragenden Ende einen Plungerkopf trägt, wobei eine Kammer des Druckzylinders mit einem kompressiblen Medium gefüllt ist und eine zweite, durch eine dichte Verschlußmutter von der ersten Kammer getrennte, mit Öl oder mit Öl und einem kompressiblen Medium gefüllte Kammer vorgesehen ist und das kompressible Medium beider Kammern über Ventile druckbeaufschlagt einfüllbar ist. Die den Plungerkopf aufnehmende Kammer entspricht dabei im Durchmesser dem Plungerkopf, der auf seiner Außenseite mit Dicht- oder Führungsringen versehen ist. In der zylindrischen Wand der mit Öl gefüllten Kammer sind Längsnuten vorgesehen, durch die bei Beaufschlagung der Stoßvorrichtung das Öl in den Raum hinter den Plungerkopf strömt. Bei dieser Ausführung erfordert die Anordnung zweier voneinander vollständig. getrennter Druckräume, insbesondere bei dem aus einem Gas bestehenden kompressiblen Medium, einen hohen Aufwand bezüglich der Abdichtung. Schließlich wird, systembedingt, nach einem Auflaufstoß ein hoher Rückstoß erzeugt.

Aus der DE-C-471 804 ist außerdem eine Flüssigkeitsbremse, insbesondere für Puffer an Eisenbahnfahrzeugen bekannt, wobei in den Gehäuseteilen des Puffers ein separater Druckzylinder angeordnet ist.

Der vorliegenden Erfindung liegt die Aufgabe zugrunde, eine Stoßvorrichtung zur federnden und absorbierenden Aufnahme von Stoßkräften der eingangs genannten Art zu finden, deren Energieverzehr mit einfachen Mitteln genau dosierbar ist, die auch bei stärkster Beanspruchung verschleißfest und dicht ist, so daß die statische Kennlinie erhalten bleibt und die im übrigen die Nachteile der als Stand der Technik beschriebenen Ausführungen vermeidet.

Diese Aufgabe wird gemäß der Erfindung dadurch gelöst, daß ein separater Druckzylinder in den Gehäuseteilen angeordnet ist, die Medium Kammern beide mit einem Elastomer gefüllt sind, in dem Führungsring Öffnungen zum ungehinderten Durchströmen des Elastomers angeordnet sind, der Plungerkopf mit definiertem Spiel in der ersten Kammer geführt ist, und die zweite Kammer einen größeren Durchmesser als die erste Klammer aufweist.

Weitere besonders günstige Ausführungsformen sind in den Ansprüchen 2 bis 4 aufgeführt. Üblicherweise ist erfindungsgemäß die erste Medium-Kammer zylindrisch ausgeführt. Es ist jedoch zur Veränderung der Kennlinie auch möglich, die erste Kammer konisch mit sich vom Führungsring an verjüngendem Querschnitt auszubilden.

Es hat sich als vorteilhaft erwiesen, daß die zweite Kammer einen größeren Durchmesser als die erste Kammer aufweist und daß in die zweite Kammer neben dem Elastomer ein Gas in maximal der Menge eingefüllt ist, daß bei in Arbeitstellung stehender Stoßvorrichtung (horizontal) der Elastomerspiegel oberhalb der Öffnungen steht. Ein Vorteil der erfindungsgemäßen Stoßvorrichtung liegt insbesondere darin, daß bei den zwei mit Elastomer gefüllten Kammern in dem Druckzylinder die zweite, mit größerem Volumen als die erste Kammer ausgebildet werden kann, wodurch die statische Kennlinie der Stoßvorrichtung, sowie der Rücklauf der Stoßvorrichtung nach erfolgtem Stoß genau definiert ist. Durch das Einfüllen von Gas, neben dem Elastomer in die zweite Kammer in definierter Menge wird zum einen zusätzlich die statische Kennlinie der Stoßvorrichtung vorteilhaft beeinflußt und zum anderen die Gefahr einer zu großen Veränderung der statischen Kennlinie bei geringem Druckverlust vermindert.

Schließlich zeigt vorliegende Erfindung die Möglichkeit auf, einen vorhandenen Hülsenpuffer ohne Veränderung des Gehäuses durch Einbau des Druckzylinders umzurüsten.

Vorteilhaft weist die Stoßvorrichtung gemäß der Erfindung zwei Führungen für den Plunger auf. Hierdurch wird ein Verkanten des Plungerschaftes und damit ein vorzeitiger Verschleiß der Führungen vermieden. Ein weiterer Vorteil der Stoßvorrichtung nach der Erfindung ist in der Anordnung der Druckentlastungsnut zu sehen. Beim Komprimieren des Elastomers nach erfolgtem Stoß kann sich der Druck in der Druckentlastungsnut durch das definierte Spiel zwischen Bund der Verschlußmutter und der Plungerschaft nur so langsam aufbauen, daß bei der nur ganz kurzfristig auftretenden höchsten Kompressionsstufe der Stoßvorrichtung der Druck in dem Druckentlastungsraum wesentlich geringer ist als in dem Arbeitsraum des Druckzylinders. Hierdurch wird eine Überbeanspruchung der Abdichtung des Plungerschaftes gegenüber der Verschlußmutter vermieden.

Einzelheiten der Erfindung sind anhand eines Ausführungsbeispiels in der Zeichnung erläutert. Es zeigt

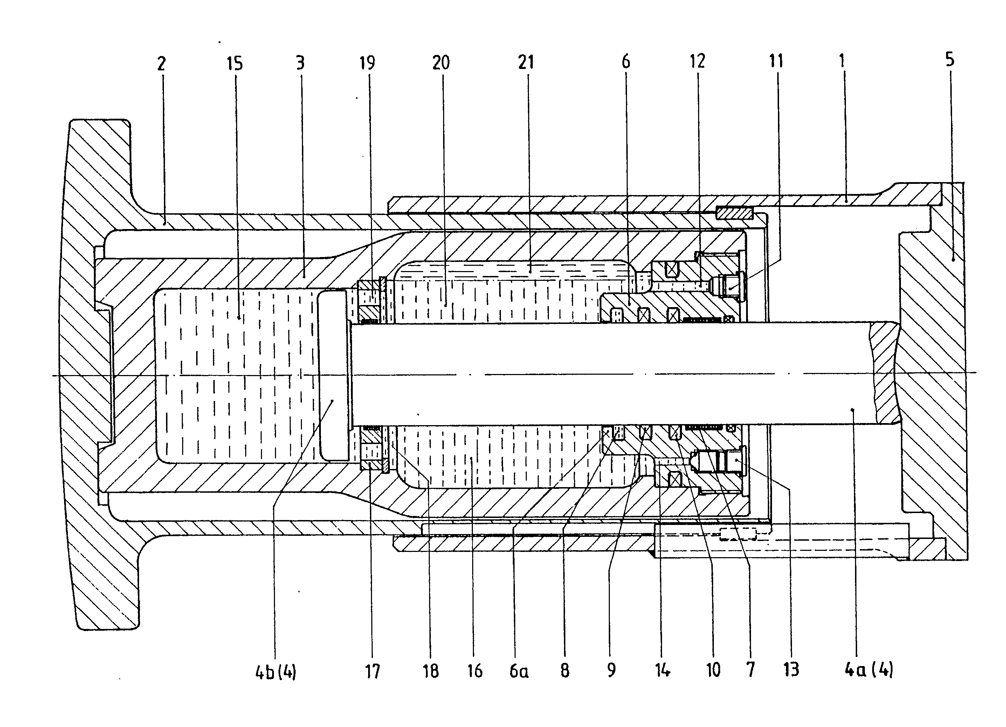

Fig. 1    einen Längsschnitt durch eine Stoßvorrichtung gemäß der Erfindung.

Die in der Zeichnung dargestellte Stoßvorrichtung zeigt einen aus Pufferhülse 1 und Pufferstößel 2 in seinen äußeren Bauteilen bestehenden Hülsenpuffer für Schienenfahrzeuge. In dem Hülsenpuffer ist mit seinem Boden innen gegen den Pufferstößel 2 anliegend ein Druckzylinder 3 angeordnet, in dem ein aus Plungerschaft 4a und Plungerkopf 4b bestehender Plunger 4 längsverschieblich angeordnet ist. Der Plungerschaft 4a stützt sich mit seinem freien Ende gegen den Boden 5 der Pufferhülse 1 ab. Der Druckzylinder 3 ist an seinem offenen Ende mit einer Verschlußmutter 6 versehen, die eine zentrische Bohrung mit einer ersten Führung 7 für den Plungerschaft 4a aufweist. Nahe dem dem Arbeitsraum zugekehrten Ende ist in der zentrischen Bohrung der Verschlußmutter 6 eine umlaufende Druckentlastungsnut 8 angeordnet. Der zwischen Druckentlastungsnut 8 und dem Arbeitsraum des Druckzylinders 3 verbleibende Bund 6a der Verschlußmutter 6 ist mit definiertem Spiel zu dem Plungerschaft 4a versehen. Zwischen Druckentlastungsnut 8 und Führung 7 der Verschlußmutter 6 sind Dichtungen 9 und Abstreifringe 10 angeordnet. Die Verschlußmutter 6 weist weiter je einen mit einem Verschlußstopfen 11 verschlossenen Kanal 12 zum Arbeitsraum des Druckzylinders 3 und einen mit einem Gaseinfüllventil 13 verschlossenen Kanal 14 zum Arbeitsraum des Druckzylinders 3 auf. Der Arbeitsraum des Druckzylinders 3 ist in eine erste Elastomerkammer 15 und eine zweite Elastomerkammer 16 aufgeteilt, wobei die erste Elastomerkammer 15, im Ausführungsbeispiel zylindrisch ausgeführt, im Durchmesser mit definiertem Spiel dem Plungerkopf 4b entspricht und die zweite Elastomerkammer 16 vorteilhaft auch zylindrisch mit größerem Durchmesser ausgeführt ist. Die erste Elastomerkammer 15 und zweite Elastomerkammer 16 werden durch einen Führungsring 17 voneinander getrennt, der eine zweite Führung 18 für den Plungerschaft 4a aufweist und mit Öffnungen 19 versehen ist. Die Elastomerkammer 15 ist vollständig und die Elastomerkammer 16 soweit mit einem Elastomer 20 der Polymethylhydrogensiloxan-Gruppe gefüllt, daß bei in Arbeitsstellung (horizontal) stehendem Hülsenpuffer der Elastomerspiegel höher als die oberste Öffnung 19 des Führungsringes 18 steht. In die zweite Elastomerkammer 16 ist nebem dem Elastomer 20 ein Gas 21 in definierter Menge eingefüllt.

Elastomer 20 und Gas 21 werden in dem Druckzylinder 3 vorgespannt. Bei einem Auflaufstoß dringt der Plunger 4 mit seinem Plungerkopf 4b in die Elastomerkammer 15 ein, komprimiert und verdrängt das sich in dieser Elastomerkammer 15 befindliche Elastomer 20 um den Plungerkopf definiert und ungehindert durch die Öffnungen 19 des Führungsrings 17 in die zweite Elastomerkammer 16. In der zweiten Elastomerkammer 16 wird neben dem Elastomer 20 das Gas 21 komprimiert. Durch den Bund 6a der Verschlußmutter 6 und die Druckentlastungsnut 8 wird die Druckspitze von der Dichtung 9 der Verschlußmutter 6 ferngehalten.

Bei Entlastung des Hülsenpuffers bewirken die mit größerem Volumen versehene zweite Elastomerkammer 16 und das definierte Spiel um den Plungerkopf 4b ein langsames definiertes Zurückführen des Puffers in seine Ausgangsstellung.

**Ansprüche**

1.  Stoßvorrichtung zur federnden und absorbierenden Aufnahme von Stoßkräften, insbesondere Hülsenpuffer für Schienenfahrzeuge, bestehend aus
    - zwei teleskopartig ineinander geführten, gegen Federkraft zueinander verspannten Gehäuseteilen (1/2),
    - einem in dem einen Gehäuseteil (2) angeordneten Druckzylinder (3),
    - einem aus dem Druckzylinder (3) ragenden, gegen das andere Gehäuseteil (1) abgestützten Plunger (4), der an seinem in den Druckzylinder (3) ragenden Ende einen Plungerkopf (4b) trägt, wobei
    - der Druckzylinder (3) mit einem kompressiblen Medium gefüllt ist und
    - zwei durch einen Führungsring (17) für den Plungerschaft (4a) getrennte Medium-Kammern (15/16) aufweist,
    dadurch gekennzeichnet, daß
    - ein seperater Druckzylinder (3) in den Gehäuseteilen (1/2) angeordnet ist,
    - die Medium-Kammern (15/16) beide mit einem Elastomer (20) gefüllt sind,
    - in dem Führungsring (17) Öffnungen (19) zum ungehinderten Durchströmen des Elastomers (20) angeordnet sind,
    - der Plungerkopf (4b) mit definiertem Spiel in der ersten Kammer (15) geführt ist, und
    - die zweite Kammer (16) einen größeren Durchmesser als die erste Kammer (15) aufweist.

2.  Stoßvorrichtung nach Anspruch 1, dadurch gekennzeichnet, daß in die zweite Kammer (16) neben dem Elastomer (20) ein Gas (21) in maximal der Menge eingefüllt ist daß bei in Arbeitsstellung stehender Stoßvorrichtung (horizontal) der Elastomerspiegel oberhalb der Öffnungen (19) steht.

3.  Stoßvorrichtung nach Anspruch 1 oder 2, dadurch gekennzeichnet, daß der Plungerschaft (4a) mittels einer Führung (7) in einer zentrischen Bohrung einer den Druckzylinder (3) verschließenden Verschlußmutter (6) geführt ist und in der Verschlußmutter (6) nahe dem der zweiten Kammer (16) zugekehrten Ende in der zentrischen Bohrung eine umlaufende Druckentlastungsnut (8) angeordnet ist und daß der zwischen Druckentlastungsnut (8) und Kammer (16) verbleibende Bund (6a) mit definiertem Spiel zu dem Plungerschaft (4a) versehen ist.

4.  Stoßvorrichtung nach einem der Ansprüche 1 bis 3, dadurch gekennzeichnet, daß die erste Kammer (15) konisch mit sich vom Führungsring (17) an verjüngendem Durchmesser ausgebildet ist.

**Claims**

1.  Buffer device for the elastic absorbtion of shocks, in particular a sleeve buffer for rail vehicles, consisting of
    - two housing parts (1/2) guided telescopically inside one another and restrained relative to one another against elastic force,
    - a pressure cylinder (3) arranged in one housing part (2),
    - a plunger (4) which projects from the pressure cylinder (3), is supported against the other housing part (1) and has a plunger head (4b) at its end projecting into the pressure cylinder (3), in which arrangement
    - the pressure cylinder (3) is filled with a compressible medium, and
    - has two medium chambers (15/16) separated by a guide ring (17) for the plunger shaft (4a),
    characterised in that
    - a separate pressure cylinder (3) is arranged in the housing parts (1/2),
    - the medium chambers (15/16) are both filled with an elastomer (20),
    - openings (19) to allow the elastomer (20) to flow through unimpeded are arranged in the guide ring (17),
    - the plunger head (4b) is guided with defined clearance in the first chamber (15), and
    - the second chamber (16) has a larger diameter than the first chamber (15).

2.  Buffer device according to Claim 1, characterised in that, apart from the elastomer (20), a gas (21) is put into the second chamber (16) in, at most, such a quantity that the elastomer level is above the openings (19) when the buffer device is in the working position (horizontal).

3.  Buffer device according to Claim 1 or 2, characterised in that the plunger shaft (4a) is guided by means of a guide (7) in a central bore of a closing nut (6) closing the pressure cylinder (3), and an encircling pressure-relief groove (8) is arranged in the central bore of the closing nut (6) near to the end facing the second chamber (16), and in that the collar (6a) remaining between pressure-relief groove (8) and chamber (16) is provided with defined clearance relative to the plunger shaft (4a).

4. Buffer device according to one of Claims 1 to 3, characterised in that the first chamber (15) is of conical design with a diameter narrowing from the guide ring (17).

**Revendications**

1. Appareil de choc pour supporter élastiquement avec un effet d'absorption des efforts de chocs, en particulier tampon à boisseau pour véhicules ferroviaires, composé de:
   - deux parties de boîtier (1/2), guidées l'une dans l'autre de façon télescopique, contraintes l'une par rapport à l'autre contre la force d'un ressort,
   - un cylindre de pression (3), disposé dans l'une des partie de boîtier (2),
   - un plongeur (4), sortant du cylindre de pression (3), prenant appui contre l'autre partie de boîtier (1) et portant à son extrémité pénétrant dans le cylindre de pression (3) une tête de plongeur (4b),
   - le cylindre de pression (3) étant rempli d'un fluide compressible, et
   - présentant deux chambres de fluide (15/16), séparées par une bague de guidage (17) pour la tige de plongeur (4a),
   caractérisé en ce qu'
   - un cylindre de pression séparé (3) est disposé dans les parties de boîtier (1/2),
   - les deux chambres de fluide (15/16) sont remplies d'un fluide élastomère (20),
   - des ouvertures (19) servant à l'écoulement sans entrave de l'élastomère (20) sont ménagées dans la bague de guidage (17),
   - la tête de plongeur (4b) est guidée avec un jeu défini dans la première chambre (15), et
   - la deuxième chambre (16) présente un diamètre plus grand que la première chambre (15).

2. Appareil de choc selon la revendication 1, caractérisé en ce que la deuxième chambre (16) est remplie, outre l'élastomère (20), d'un gaz (21) en quantité maximale permettant que, lorsque l'appareil de choc est en position de travail (horizontale), le niveau d'élastomère se situe au-dessus des ouvertures (19).

3. Appareil de choc selon la revendication 1 ou 2, caractérisé en ce que la tige de plongeur (4a) est guidée, grâce à un guidage (7), dans un alésage central d'un écrou d'obturation (6) obturant le cylindre de pression (3), et une gorge circulaire d'équilibrage de pression (8) est ménagée dans l'écrou d'obturation (6), dans l'alésage central, près de l'extrémité tournée vers la deuxième chambre (16), et que la collerette (6a) qui subsiste entre l'écrou d'équilibrage de pression (8) et la chambre (16) est pourvue d'un jeu défini par rapport à la tige de plongeur (4a).

4. Appareil de choc selon l'une des revendications 1 à 3, caractérisé en ce que la première chambre (15) est conique, avec un diamètre qui va en diminuant depuis la bague de guidage (17).